Europäisches Patentamt

European Patent Office

Office européen des brevets

(11) Veröffentlichungsnummer : **0 138 169**
**B1**

(12) # EUROPÄISCHE PATENTSCHRIFT

(45) Veröffentlichungstag der Patentschrift :
06.07.88

(51) Int. Cl.⁴ : **B 29 C 45/07, B 29 C 45/13**

(21) Anmeldenummer : 84111930.8

(22) Anmeldetag : 05.10.84

(54) **Vorrichtung zum Spritzgiessen von Formteilen aus thermoplastischen und anderen Formstoffen.**

(30) Priorität : 15.10.83 DE 3337546

(43) Veröffentlichungstag der Anmeldung :
24.04.85 Patentblatt 85/17

(45) Bekanntmachung des Hinweises auf die Patenterteilung : 06.07.88 Patentblatt 88/27

(84) Benannte Vertragsstaaten :
AT BE CH DE FR GB IT LI LU NL SE

(56) Entgegenhaltungen :
AT-B- 315 470
CH-A- 398 964
DE-B- 2 455 088

(73) Patentinhaber : Battenfeld GmbH
Scherl 10
D-5882 Meinerzhagen (DE)

(72) Erfinder : Holzschuh, Johann
Haydnstrasse 2
D-5882 Meinerzhagen (DE)

(74) Vertreter : Müller, Gerd et al
Patentanwälte HEMMERICH-MÜLLER-GROSSE-
POLLMEIER-MEY Hammerstrasse 2
D-5900 Siegen 1 (DE)

EP 0 138 169 B1

## Beschreibung

Die Erfindung bezieht sich auf eine Vorrichtung zum Spritzgießen von Formteilen aus thermoplastischen und anderen Kunststoffen gemäß dem Oberbegriff des Anspruches 1.

Bei Vorrichtungen zum Spritzgießen von Formteilen aus thermoplastischem Kunststoff ist es insbesondere beim Wechsel des Spritzwerkstoffes und der damit verbundenen unterschiedlichen Geometrie der Plastifizier- und Förderschnecke erforderlich, die Plastifiziereinheit bzw. den Schneckenzylinder auszuwechseln. Dies ist umständlich und zeitraubend. In Abhängigkeit von dem gerade verarbeiteten Werkstoff muß die Plastifiziereinheit vor ihrer Demontage nach gereinigt werden, so daß die eigentliche Zeit für das Auswechseln der Plastifiziereinheit noch durch die Reinigungsarbeiten in unerwünschter Weise erhöht wird.

Aus der veröffentlichten EP-A-0 069 221 ist eine Spritzgießmaschine bekannt, die mit einer Werkzeugeinheit und zwei voneinander getrennten, wechselweise an die Werkzeugeinheit ankuppelbaren Plastifiziereinheiten versehen ist. Während die eine Plastifiziereinheit mit der Werkzeugeinheit in Wirkverbindung steht und dabei mit dem Antrieb der Spritzgießmaschine gekuppelt sowie mit den anderen Versorgungsleitungen verbunden ist, befindet sich die andere bzw. zweite Plastifiziereinheit an einem vorbestimmten Lagerplatz in einem neben der Spritzgießmaschine angeordneten Magazin. An diesem Lagerplatz kann die Plastifiziereinheit mit anderen Versorgungsleitungen verbunden werden, so daß sie entweder auf Temperatur gehalten oder vor dem nächsten Einsatz wieder auf die gewünschte Temperatur gebracht werden kann. Eine Reinigung der Plastifiziereinheit, bei der ein Antrieb der Plastifizier- und Förderschnecke erforderlich ist, kann hier nicht erfolgen. Dies ist nur in der Spritzgießmaschine möglich, so daß auch hier in diesem Fall zu der Auswechselzeit für die Plastifiziereinheit noch die Zeit für die Reinigung derselben hinzukommt.

Bei dieser bekannten Spritzgießmaschine werden beim Auswechseln der Plastifiziereinheiten zuerst die Antriebs- und Energiezufuhrkupplungen über besondere Betätigungsmittel gelöst. Sodann wird die in der Spritzgießmaschine befindliche Plastifiziereinheit von einer dreidimensional bewegbaren Greifvorrichtung erfaßt und im Magazin abgesetzt. Dann wird die andere, im Magazin vorbereitete Plastifiziereinheit durch die Greifvorrichtung zur Spritzgießmaschine transportiert, wo sie erst nach dem Kuppeln mit dem Antrieb und den Energiezufuhrleitungen wieder betriebsbereit ist. Für die Bewegung der Greifvorrichtung ist ein die Spritzmaschine und das Magazin übergreifendes Rahmengestell vorgesehen, auf dem ein Brückenkran mit Laufkatze horizontal verfahrbar ist. Die Laufkatze besitzt ihrerseits einen vertikal bewegbaren Tragarm zur Aufnahme der Greifvorrichtung. Diese bekannte Spritzmaschine erfordert einen großen Platzbedarf und einen hohen Herstellungsaufwand. Trotzdem wird für das Auswechseln der Plastifiziereinheiten ein noch verhältnismäßig hoher Zeitaufwand benötigt, der für eine Produktion nicht nutzbar ist.

Der Erfindung liegt deshalb die Aufgabe zugrunde, eine Vorrichtung zum Spritzgießen von Formteilen aus thermoplastischem Kunststoff mit zwei auswechselbaren Plastifiziereinheiten zu schaffen, bei der das Auswechseln der Plastifiziereinheiten ohne großen Aufwand und in kürzester Zeit erfolgen kann.

Zur Lösung dieser Aufgabe ist die Vorrichtung gemäß dem Kennzeichen des Anspruches 1 ausgebildet. Durch einen einfachen, geradlinigen Bewegungsvorgang wird hier die eine Plastifiziereinheit von der Werkzeugeinheit entfernt und die andere Plastifiziereinheit mit der Werkzeugeinheit in Verbindung gebracht, wo dieselbe in kürzester Zeit betriebsbereit ist. Um das Verschieben der Plastifiziereinheiten zu vereinfachen, sind dieselben in einer weiteren Ausgestaltung auf einem gemeinsamen Rahmen angeordnet. Die Umschalteinrichtungen sind entweder manuell oder über in der Bewegungsbahn der Plastifiziereinheiten angeordnete Schalter betätigbar.

Wenn die Plastifiziereinheiten jeweils von einem hydraulischen Antrieb angetrieben werden, ist es möglich, den hydraulischen Antrieb der nicht an die Werkzeugeinheit angekuppelten Plastifiziereinheit über eine Umschalteinrichtung an eine hydraulische Pumpe mit geringer Leistung anzuschließen. Dadurch wird der Energieaufwand für das Reinigen der Plastifiziereinheit verringert.

Die Erfindung wird nachfolgend anhand eines in einer Zeichnung in vereinfachter Weise dargestellten Ausführungsbeispieles näher erläutert. Dabei zeigen :

Figur 1 eine Draufsicht auf eine Vorrichtung gemäß der Erfindung und

Figur 2 eine der Fig. 1 entsprechende Darstellung mit verschobenen Plastifiziereinheiten.

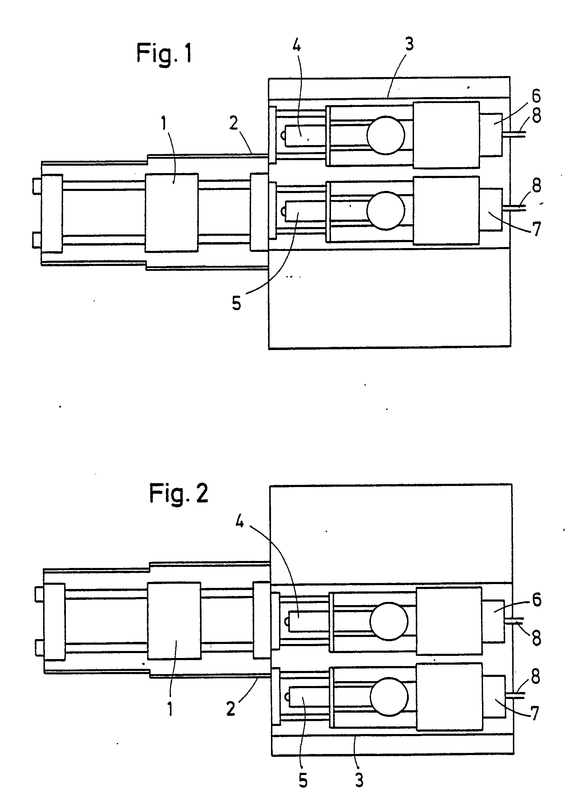

Die in den Figuren 1 und 2 der Zeichnung dargestellte Vorrichtung dient zum Spritzgießen von Formteilen aus thermoplastischem Kunststoff. Sie besteht aus einer nur angedeuteten Werkzeugeinheit 1, die auf einem Maschinenrahmen 2 angeordnet ist.

Fluchtend zu diesem Maschinenrahmen 2 befindet sich ein Rahmen 3, der mittels eines nicht dargestellten Antriebes quer zur Werkzeugeinheit 1 verschiebbar bzw. verfahrbar angeordnet ist. Die Bewegung dieses Rahmens 3 erfolgt auf nicht dargestellten Schienen oder Führungen.

Auf diesem Rahmen 3 sind zwei Plastifiziereinheiten 4, 5 mit Abstand parallel zueinander befestigt, die wechselweise bei der Bewegung des Rahmens 3 in eine fluchtende Stellung zur Werkzeugeinheit 1 bringbar sind. In der Fig. 1 nimmt die Plastifiziereinheit 5 ihre Arbeitsstellung ein, während sich in der Fig. 2 die Plastifiziereinheit 4 in ihrer Arbeitsstellung an der Werkzeugeinheit 1 befindet. Jede Plastifiziereinheit 4, 5 ist in diesem Ausführungsbeispiel mit einem nur angedeuteten hydraulischen Antrieb 6, 7 versehen, die über Leitungen 8 mit einer unterhalb der Plastifiziereinheiten 4, 5 im Rahmen 3 angeordneten, in der Zeichnung nicht dargestellten hydraulischen Pumpe verbunden sind. In diese Leitungen 8 sind nicht dargestellte, bspw. als Magnetventile ausgebildete Umschalteinrichtungen eingesetzt, über die immer nur die an der Werkzeugeinheit 1 anliegende Plastifiziereinheit 4 mit hoher Antriebsleistung beaufschlagbar ist. Die nicht mit der Werkzeugeinheit 1 in Verbindung stehende Plastifiziereinheit 4 oder 5 wird nur mit geringer Leistung beaufschlagt, die entweder von der gleichen hydraulischen Pumpe oder einer besonderen Pumpe mit geringerer Antriebsleistung abgeleitet wird. Ferner ist an jeder Plastifiziereinheit 4, 5 eine nicht gezeichnete elektrische Versorgungsleitung angeschlossen, so daß jede Plastifiziereinheit 4, 5 aufheizbar und damit in den vorgegebenen Grenzen funktionsfähig ist. Zur Steuerung dieser Funktionen ist jeder Plastifiziereinheit 4, 5 eine eigene Bedienungs- und Steuertafel zugeordnet, die in der Zeichnung nicht dargestellt ist und sich an der freien Seitenfläche jeder Plastifiziereinheit 4, 5 befindet.

Obwohl die Plastifiziereinheiten 4, 5 in der Zeichnung gleich dargestellt sind, können dieselben, insbesondere was die Ausbildung der Plastifizier- und Förderschnecke betrifft, unterschiedlich ausgebildet sein. Während sich in Fig. 1 die Plastifiziereinheit 5 in Wirkverbindung mit der Werkzeugeinheit 1 befindet, kann die Plastifiziereinheit 4, die frei zugänglich ist, ohne Störung des Betriebsablaufes gereinigt und für die erneute Inbetriebnahme vorbereitet werden. Dazu gehört es auch, daß die Plastifiziereinheit 4 annähernd auf die Spritztemperatur aufgeheizt wird. Der hier vorbereitete Spritzwerkstoff kann gleich oder anders sein als der Werkstoff, der mit der Plastifiziereinheit 5 verarbeitet wird. Sobald von der Plastifiziereinheit 5 die benötigte Anzahl von Formteilen mit der Werkzeugeinheit 1 hergestellt wurde, werden die beiden Plastifiziereinheiten 4, 5 aus ihrer Stellung gemäß Fig. 1 in die Stellung der Fig. 2 bewegt. Dabei kann gleichzeitig auch das in der Werkzeugeinheit 1 befindliche Formwerkzeug mittels einer besonderen Wechselvorrichtung ausgetauscht werden. Wenn die Plastifiziereinheiten 4, 5 ihre Endstellung gemäß Fig. 2 erreicht haben, werden entweder manuell oder über einen besonderen Endschalter die in den hydraulischen Versorgungsleitungen 8 angeordneten Umschalteinrichtungen und gegebenenfalls auch Umschalteinrichtungen, bspw. Schaltschütze, in den elektrischen Versorgungsleitungen umgeschaltet, so daß jetzt die Plastifiziereinheit 4 für Einspritzvorgänge zur Herstellung von Formteilen zur Verfügung steht.

Währenddessen kann die Plastifiziereinheit 5 bei verringerter Temperatur sowie bei reduzierter Schneckendrehzahl und mit verringertem Drehmoment zur Reinigung von dem vorher verarbeiteten Werkstoff weiter betrieben werden. Dies erfolgt ohne Störung des Betriebsablaufes, da die Plastifiziereinheit 4 von der anderen Seite bedient wird.

## Patentansprüche

1. Vorrichtung zum Spritzgießen von Formteilen aus thermoplastischen und anderen Kunststoffen, bestehend aus einer Werkzeugeinheit (1) mit einem auswechselbaren Formwerkzeug und zwei voneinander getrennten, wechselweise an die Werkzeugeinheit ankuppelbaren Plastifiziereinheiten (4, 5) mit Versorgungsleitungen (8), dadurch gekennzeichnet, daß die beiden, mit jeweils einem eigenen Antrieb (6, 7) versehenen Plastifiziereinheiten (4, 5) quer zur Werkzeugeinheit (1) bewegbar angeordnet und die Versorgungsleitungen (8) fest an die Plastifiziereinheiten (4, 5) angeschlossen und mit Umschalteinrichtungen versehen sind.

2. Vorrichtung nach Anspruch 1, dadurch gekennzeichnet, daß die beiden Plastifiziereinheiten (4, 5) auf einem gemeinsamen Rahmen (3) angeordnet sind.

3. Vorrichtung nach Anspruch 1 oder 2, dadurch gekennzeichnet, daß die Umschalteinrichtungen manuell betätigbar sind.

4. Vorrichtung nach Anspruch 1 oder 2, dadurch gekennzeichnet, daß die Umschalteinrichtungen über in der Bewegungsbahn der Plastifiziereinheiten (4, 5) angeordnete Schalter betätigbar sind.

5. Vorrichtung nach einem der Ansprüche 1 bis 4, mit jeweils einem einer Plastifiziereinheit zugeordneten hydraulischen Antrieb, dadurch gekennzeichnet, daß der hydraulische Antrieb (7) der nicht an die Werkzeugeinheit (1) angekuppelten Plastifiziereinheit (5) über eine Umschalteinrichtung an eine hydraulische Pumpe mit geringer Leistung anschließbar ist.

## Claims

1. Device, for the injection-moulding of moulded parts of thermoplastic and other synthetic materials, consisting of a tool unit (1) with an exchangeable moulding tool two plasticising units (4, 5), which are each separate from the other and alternately couplable to the tool unit, with supply ducts (8), characterised thereby that both the plasticising units (4, 5) are each provided with a respective individual drive (6, 7) and arranged to be movable transversely to the tool unit (1) and the supply ducts (8) are firmly connected to the plasticising units (4, 5) and provided with change-over switch equipments.

2. Device according to claim 1, characterised thereby, that both the plasticising units (4, 5) are arranged on a common frame (3).

3. Device according to claim 1 or 2, characterised thereby, that the change-over switch equipments are actuable manually.

4. Device according to claim 1 or 2, characterised thereby, that the change-over switch equipments are actuable by way of switches arranged in the path of movement of the plasticising units (4, 5).

5. Device according to one of the claims 1 to 4, with an hydraulic drive respectively associated with each plasticising unit, characterised thereby, that the hydraulic drive (7) of the plasticising unit (5) not coupled to the tool unit (1) is connectable by way of a change-over switch equipment to an hydraulic pump of low power.

## Revendications

1. Dispositif pour la coulée sous pression de pièces moulées en matières thermoplastiques et autres matières plastiques constitué par une unité d'outil (1) comportant un outil de moulage susceptible d'être remplacé et deux unités de plastification (4, 5) séparées l'une de l'autre qui peuvent être accouplées alternativement à l'unité d'outil et sont munies de conduites d'alimentation, caractérisé en ce que les deux unités de plastification (4, 5), qui sont munies chacune d'un dispositif de commande propre (6, 7), sont montées de manière à pouvoir se déplacer transversalement par rapport à l'unité d'outil (1) et que les conduites d'alimentation (8) sont solidaires des unités de plastification (4, 5) et comportent des dispositifs de commutation.

2. Dispositif selon la revendication 1, caractérisé en ce que les deux unités de plastification (4, 5) sont montées dans un cadre commun.

3. Dispositif selon l'une des revendications 1 ou 2, caractérisé en ce que les dispositifs de commutation peuvent être manœuvrés à la main.

4. Dispositif selon l'une des revendications 1 ou 2, caractérisé en ce que les dispositifs de commutation peuvent être manœuvrés par l'intermédiaire de commutateurs situés sur le trajet de déplacement des unités de plastification (4, 5).

5. Dispositif selon l'une des revendications 1 à 4, qui comporte, pour chaque unité de plastification, un dispositif de commande hydraulique, caractérisé en ce que le dispositif de commande hydraulique (7) de l'unité de plastification (5) qui n'est pas accouplée à l'unité d'outil (1) peut être relié, par l'intermédiaire d'un dispositif de commutation, à une pompe hydraulique de faible puissance.

Fig. 1

Fig. 2

0 138 169